# EUROPÄISCHE PATENTSCHRIFT

(11) **EP 0 650 551 B1**
(45) Veröffentlichungstag und Bekanntmachung des Hinweises auf die Patenterteilung: **10.01.1996**
(21) Anmeldenummer: 93915912.5
(22) Anmeldetag: 14.07.1993
(51) Int. Cl.: F01N 3/02

(54) **VERFAHREN UND VORRICHTUNG ZUR PARTIKELENTFERNUNG AUS ABGASEN VON BRENNKRAFTMASCHINEN**
METHOD AND DEVICE FOR REMOVING PARTICLES FROM INTERNAL-COMBUSTION ENGINE EXHAUST GASES
PROCEDE ET DISPOSITIF D'ELIMINATION DE PARTICULES DANS DES GAZ D'ECHAPPEMENT DE MOTEURS A COMBUSTION INTERNE

(30) Priorität: 15.07.1992 DE 4223277
(43) Veröffentlichungstag der Anmeldung: 03.05.1995
(73) Patentinhaber: Linde Aktiengesellschaft, D-65189 Wiesbaden (DE); GST SYSTEME, GESELLSCHAFT FÜR ABSCHEIDE- UND STEUERTECHNIK mbH, D-63517 Rodenbach (DE)
(72) Erfinder: BÖLT, Heinz, D-82515 Wolfratshausen (DE); WALSER, Franz, D-82418 Murnau (DE); SCHÖNEBORN, Axel, D-63517 Rodenbach (DE)
(74) Vertreter: Kasseckert, Rainer
(86) Internationale Anmeldenummer: EP9301851
(87) Internationale Veröffentlichungsnummer: WO9402719

(56) Entgegenhaltungen:
- EP-A- 0 049 454
- EP-A- 0 452 433
- US-A- 4 406 119
- PATENT ABSTRACTS OF JAPAN vol. 8, no. 274 (M-345)(1711) 14. Dezember 1984 & JP-59 145 314 (MITSUBISHI KK) 20. August 1984
- PATENT ABSTRACTS OF JAPAN vol. 8, no. 260 (C-254) 29. November 1984 & JP-59 139 954 (MATSUSHITA DENKI SANGYO KK) 11. August 1984

## Beschreibung

Die Erfindung betrifft ein Verfahren zur Entfernung von Partikeln, insbesondere Rußpartikeln, aus dem Abgasstrom von Brennkraftmaschinen, wobei die Partikeln über zumindest eine Elektrode elektrostatisch aufgeladen werden, teilweise Agglomerate bilden und die Partikeln bzw. Partikelagglomerate mittels eines oder mehrerer Filter abgeschieden werden, sowie eine Vorrichtung zur Entfernung von Partikeln. insbesondere Rußpartikeln, aus dem Abgasstrom von Brennkraftmaschinen, wobei die Vorrichtung ein Gehäuse mit einer Zu- und Ableitung für den Abgasstrom, zumindest eine mit einer Hochspannungsquelle verbundene Elektrode zur elektrostatischen Aufladung der Partikeln und einen Filterkörper umfaßt.

Bei den Bestrebungen, die Umweltbelastungen durch Abgase von Brennkraftmaschinen weiter zu verringern, spielt, insbesondere bei Dieselmotoren, die Reduktion der Partikelemission im Abgas eine große Rolle. Zahlreiche technische Lösungsversuche wurden daher zur Entfernung der im Abgasstrom enthaltenen Partikel, im wesentlichen Rußpartikel, unternommen.

Einen Überblick über den Stand der Technik bietet die Veröffentlichung "Rußfiltertechnik für Stadtlinienbusse", Internationales Verkehrswesen 40 (1988), 1. Heft Januar / Februar. Zur Partikelabscheidung werden Keramikmonolithfilter, Kerzenfilter mit Filtermittel aus Keramik oder Drahtgestrick bzw. Wickelfilter mit Keramikgarn oder eine Kombination von einem elektrischem Koagulator mit einem nachgeschaltetem Zyklon eingesetzt.

Beim letztgenannten Abscheidesystem findet im elektrischen Koagulator eine Agglomeration der Partikeln statt, um sie im nachgeschalteten Zyklon unter Ausnutzung der Zentrifugalkraft auf die Partikel im Sammelbehälter des Zyklons abscheiden zu können, während der Gasstrom durch das Tauchrohr des Zyklons als Reingas in den Auspuff abgegeben wird. Eine gesonderte Entsorgung der abgeschiedenen Partikeln ist bei diesem Abscheidesystem allerdings zwingend.

Beim Einsatz von Filtern ist eine Regeneration oder ein Austausch der Filter notwendig, da die abgeschiedenen Partikel die Filter zusetzen bzw. der Druckverlust des Filters mit zunehmender Beladung des Filters steigt. Die Regeneration erfolgt durch Abbrand bei Temperaturen oberhalb der Zündtemperatur des Rußes. Da diese Temperatur in Abgasen von Brennkraftmaschinen nicht bzw. nur im Vollastbetrieb erreicht wird, müssen entweder die Abgastemperaturen durch motorische Maßnahmen erhöht oder die Zündtemperatur des Rußes durch katalytisch wirksame, in den Kraftstoff, in die Ansaugluft oder in das Abgas selbst zugegebene Additive oder durch katalytische Beschichtungen der Filter gesenkt werden. Eine weitere Möglichkeit bietet eine Zwangsregeneration durch Zufuhr von Wärme, beispielsweise durch Brenner.

Metallische Filter wie Filter aus Drahtgestrick weisen den Nachteil einer verringerten und für Partikelentfernung aus den genannten Abgasen nicht ausreichenden Temperaturbeständigkeit auf. Sie eigenen sich insbesondere nicht für eine thermische Regenerierung.

Aus der US-A-4,406,119 ist ein Verfahren zur Enfernung von Partikeln aus dem Abgasstrom von Brennkraftmaschinen bekannt, wobei die Partikeln über eine Elektrode mit einer Hochspannung von 10-20 kV negativ aufgeladen werden, teilweise Agglomerate bilden und mittels eines Filters und eines nachgeschalteten Zyklons oder Heizelement abgeschieden werden. Die Fiiter bestehen aus poröser Keramik oder metallischen Maschen oder Geweben.

Aus der EP-A-0 425 433 ist bekannt, geladendene Rußpartikel in mindestens einem Fiiter mit entgegegengesetzter Polarität auszufiltern. Das Filtermaterial besteht aus einer offenporigen Netzstruktur aus Fasern oder einem Grundgerüst hoher Temperaturbeständigkeit, wobei die Netzstruktur in Form von Schaum, porösen Sinterkörpern, Fasergeweben, Fasergestricken, Fasergeflechten, Faservliesen oder lockeren Faserschnüre ausgebildet ist und aus elektrisch leitenden oder mit einer elektrisch leitenden Beschichtung versehenen Fasern oder aus einem derartigen Grundgerüst besteht. Elektrisch leitende Fasern oder Grundgerüste des Filtermaterials können aus Metallen, z.B. aus Edelstahl, bestehen.

Aus der JP-A-59 145 314 ist eine Vorrichtung mit einer Hochspannungselektrode zur Erzeugung eines elektrostatischen Feldes und einem Kollektor aus geschäumtem Stahl als Gegenelektrode zur Abscheidung der elektrisch geladenen Partikeln bekannt.

In der EP-A-0 244 061 ist ein Verfahren zur Regenerierung eines mit brennbaren Partikeln eines Dieselmotorabgases beladenen Filters beschrieben, wobei durch das beladene Filter ein elektrischer Strom geleitet und dadurch das Filter über die Zündtemperatur der Partikel erwärmt wird. Im Abgasstrom werden mehrere Filter parallel eingesetzt. Während der Regenerierung werden die Filter nicht vom Abgas durchströmt.

Der Erfindung liegt die Aufgabe zugrunde, ein Verfahren sowie eine Vorrichtung der eingangs genannten Art aufzuzeigen, welche eine wirkungsvolle Partikelentfernung aus den Abgasen von Brennkraftmaschinen, insbesondere von mit Verbrennungsmotoren betriebenen Land- oder Wasserfahrzeugen, auf einfache Art und Weise ermöglicht, wobei die Mobilität der Fahrzeuge nicht beeinträchtigt werden soll. Bei der Partikelentfernung sollte vor allem auch eine Regenerierung der Filter während des Betriebs der Brennkraftmaschine ermöglicht werden.

Diese Aufgabe löst das erfindungsgemäße Verfahren dadurch, daß ein sintermetallischer Feinfilter mit zumindest einer Niederschlagselektrode auch während der Regenerierung vom Abgas durchströmt wird und daß zur Regenerierung zeitweise durch das beladene Feinfilter ein elektrischer Strom geleitet und dadurch das Feinfilter über die Zündtemperatur der Partikel erwärmt wird.

Das erfindungsgemäße Verfahren nutzt die hohe Abscheideleistung von Feinfiltern aus. Die Agglomeration erleichtert die Abscheidung dazu wesentlich. Damit stellt das erfindungsgemäße Verfahren über den gesamten Bereich der Verteilung von Partikeln im Abgas, wie Dieselruß, aber auch von Tröpfchen, sicher. Das genannte Filtersystem ist dabei nicht in einen Nebenstrom, sondern in den Hauptstrom des Abgases eingebaut. Prinzipiell können mehrere Feinfilter, auch mit unterschiedlichem Abscheidegrad, kaskadenförmig eingebaut sein. Bevorzugt wird aber nur ein Feinfilter verwendet. Eine Gegenelektrode als Niederschlagselektrode befindet sich im Feinfilter bzw. in den Feinfiltern. Es findet neben der rein mechanischen Abscheidung im Filter auch eine elektrostatische Abscheidung der geladenen Partikeln statt.

Überschreitet die Abgastemperatur im Bereich des Feinfilters die Zündtemperatur der Partikeln, kommt es zu einem Abbrand der Partikeln und damit zu einer Regenerierung des Feinfilters. Gemäß der Erfindung wird zur Regenerierung des beladenen Feinfilters zeitweise durch das Feinfilter ein elektrischer Strom geleitet. Nach dem Prinzip der Widerstandheizung wird dabei das Filtermaterial heiß bzw. glüht. Dadurch erfolgt eine geregelte Erwärmung des Feinfilters über die Zündtemperatur der Partikeln (ca. zwischen 450 bis 600°C) hinaus, wodurch ein Abbrand der Partikeln und damit das Regenerieren des Feinfilters erreicht wird.

Mit Vorteil dient das Filtermaterial des Feinfilters selbst als Niederschlagselektrode. Damit kann auf den Einbau einer Gegenelektrode im Feinfilter verzichtet werden. Die Abscheideleistung des Filters kann weiter erhöht werden.

Vorzugsweise wird als Filtermaterial ein ferritisches Sintermetall eingesetzt. Dieses Material weist eine außerordentlich hohe statische und dynamische mechanische Stabilität auf. Seine Temperaturbelastbarkeit ist sehr hoch und reicht beispielsweise bis zu 900° C. Die ferritischen Sintermetalle zeichnen sich aber auch durch eine Belastungsfestigkeit gegen Temperaturwechsel aus. Die eingesetzten ferritischen Sintermetalle sind aber auch chemisch stabil, beispielsweise gegen wechselnde oxidierende und reduzierende Atmosphären. wie sie beim Filterbetrieb und der Regenerierung vorliegen.

Bevorzugt wird im erfindungsgemäßen Verfahren zwischen den Elektroden bzw. zwischen Elektrode und Filtermaterial eine Hochspannung zwischen 2 und 15 kV angelegt.

Bevorzugt wird zur Regenerierung ein elektrischer Strom kleiner 300 A mit einer elektrischen Leistung zwischen 20 und 140 W während einer Zeit von weniger als 20 s durch das Feinfilter geleitet. Durch Einhaltung der genannten Werte ist ein geregeltes Regenerieren bei Fahrzeugen mit bordeigener Versorgung möglich. Auch während des Regenerierens bleibt die Abscheidung der Partikel gewährleistet. Das erfindungsgemäße geregelte Regenerieren bringt außerordentliche Vorteile bei einer Flexibilität und Unabhängigkeit gerade für Fahrzeuge mit Brennkraftmaschinen mit sich, weil ja durch die Wahl des Regenerierzeitpunktes der Beladungsgrad des Feinfilters bestimmt werden kann und da im erfindungsgemäßen Verfahren ohnehin keine zusätzlichen Hilfsstoffe wie Additive zur Herabsetzung der Zündtemperatur eingesetzt werden müssen und Ausfallzeiten für die Regenerierung gänzlich vermieden werden. Mit besonderem Vorteil kann die elektrische Stromzufuhr periodisch erfolgen. Denkbar ist aber auch eine Stromzufuhr in Abhängigkeit vom Beladungsgrad des Feinfilters, welche beispielsweise über eine Messung des Druckverlusts im Abgas gesteuert werden kann.

Die obengenannte Aufgabe wird durch eine erfindungsgemäße Vorrichtung dadurch gelöst, daß der als Gegenelektrode dienende Filterkörper dicht schließend in das Gehäuse eingebaut ist, zumindest eine sintermetallische Filterfläche aufweist und die Filterfläche über elektrische Leitungen mit einer Stromquelle verbunden ist.

Der durch die Zuleitung in das Gehäuse eingeleitete Abgasstrom wird zunächst an zumindest einer Elektrode vorbeigeführt, die eine elektrostatische Aufladung der Partikel im Abgas bewirkt. Die Form der Elektrode ist dabei beliebig. Bevorzugt werden jedoch scheiben- oder ringförmige Elektroden eingesetzt. Es können mehrere Elektroden eingesetzt werden. Eine Gegenelektrode befindet sich im Filterkörper. Bevorzugt wird aber nur eine Elektrode mit Gegenelektrode verwendet. Der Filterkörper ist dicht schließend in das Gehäuse eingebaut, so daß der gesamte Abgasstrom die sintermetallische Filterfläche durchströmen muß. Vorteilhafterweise ist die sintermetallische Filterfläche leitend mit der Spannungsquelle über das Gehäuse oder über eine elektrische Leitung verbunden.

In der erfindungsgemäßen Vorrichtung ist die Filterfläche über elektrische Leitungen mit einer Stromquelle verbunden. Wie oben beschrieben, wird zeitweise,d.h. diskontinuierlich, durch die Filterfläche ein elektrischer Strom geleitet, der aufgrund des spezifischen elektrischen Widerstandes des erfindungsgemäß benutzten sintermetallischen Filtermaterials zum Glühen der Filterfläche bzw. zur Erwärmung über die Zündtemperatur der Rußpartikeln hinaus führt und damit den Abbrand der Partikeln bewirkt.

Mit besonderem Vorteil besteht die Filterfläche aus ferritischem Sintermetall. Bevorzugt ist die Filterfläche aus einem Filtervlies aufgebaut. Die Filterfläche kann in ihrer geometrischen Form entsprechend bekannten Filterformen ausgebildet sein. Bevorzugt besteht sie aus zylinder-, kegelstumpf- und kegelförmigen Filterflächen oder ist aus zylinder-, kegelstumpf- und/oder kegelförmigen Teilstücken zu einer bzw. mehreren Filterflächen zusammengesetzt.

Im folgenden wird die Erfindung anhand zweier Ausführungsbeispiele näher erläutert.

Hierbei zeigen:
- Figur 1:: eine erfindungsgemäße Vorrichtung mit zylinderförmiger Filterfläche und
- Figur 2:: eine erfindungsgemäße Vorrichtung mit einer aus zylinder- und kegelstumpfförmigen Teilstücken zusammengesetzte Filterfläche.

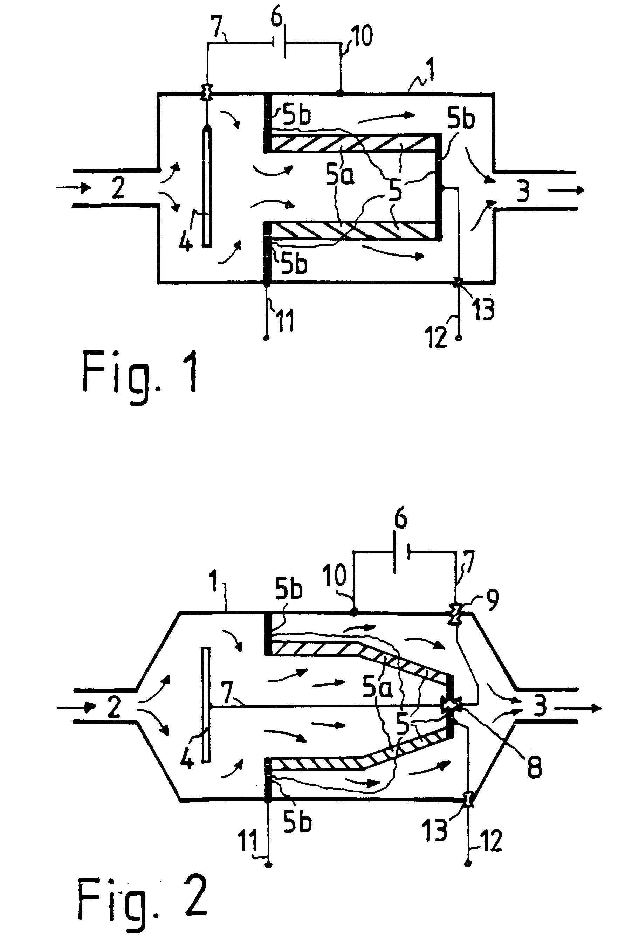

Äquivalente sind in den Figuren 1 und 2 mit gleichen Bezugszeichen versehen. Die Strömungsrichtung des Abgases ist in den Figuren durch Pfeile angedeutet.

In die in Figur 1 dargestellte Vorrichtung gelangt das zu behandelnde Partikel führende Abgas über Leitung 2 in das Gehäuse 1 des erfindungsgemäßen Partikelabscheiders. Das Abgas wird innerhalb des Gehäuses an der scheibenförmigen Sprühelektrode 4 vorbeigeleitet. Die Elektrode 4 ist über die elektrische Leifung 7 mit der Hochspannungsquelle 6 verbunden. Die Hochspannungsleitung 7 ist gegenüber dem Gehäuse 1 durch den Isolator 9 elektrisch isoliert. Der Abgasstrom mit den geladenen Partikeln bzw. den gebildeten Partikelagglomeraten gelangt von der Elektrode 4 zum Filterkörper 5, der aus der eigentlichen Filterfläche 5a und dem Filterhalter 5b besteht. Die Partikelabscheidung wird an der Filterfläche 5a durchgeführt, so daß ein partikelfreies Abgas den Partikelabscheider über Leitung 3 verläßt.

Die Partikelabscheidung an der Filterfläche 5a erfolgt sowohl mechanisch als auch elektrostatisch. Die aus ferritischem Sintermetall aufgebaute und selbst elektrisch leitende Filterfläche 5a wirkt dabei als Niederschlagselektrode. Eine elektrisch leitende Verbindung zur Hochspannungsquelle 6 besteht über den ebenfalls elektrisch leitenden Filterhalter 5b zum Gehäuse 1 und von dort über die elektrische Leitung 10 zur Spannungsquelle 6. Die zur Regeneration notwendige elektrisch leitende Verbindung zur Stromquelle wird über die elektrischen Leitungen 11 und 12 sichergestellt, wobei Leitung 12 isoliert (13) durch das Gehäuse 1 geführt ist.

Im Gegensatz zu Figur 1 ist in Figur 2 keine zylinderförmige Filterfläche 5a sondern eine aus zylinder- und kegelstumpfförmigen Teilstücken zusammengesetzte Filterfläche 5a eingebaut. Außerdem wird in Figur 2 die elektrische Anschlußleitung 7 von der Elektrode 4 zur Hochspannungsquelle 6 zunächst mittig durch den Filterkörper 5 und erst anschließend durch das Gehäuse 1 geführt. Diese spezielle Verlegung der Hochspannungsleitung 7 verhindert eine Anlagerung von Partikeln auf der Leitung 7 und einen dadurch hervorgerufenen Überschlag zwischen der Elektrode 4 und dem auf unterschiedlichem elektrischem Potential liegenden Gehäuse 1. Die notwendige elektrische Isolation gegenüber dem Filterkörper 5 und dem Gehäuse 1 erfolgt über die Isolatoren 8 und 9. Ferner ist im Unterschied zu Figur im in Figur 2 gezeigten Partikelabscheider das Gehäuse zur Zuleitung 2 und Ableitung 3 hin angeschrägt. Damit wird eine bessere Durchströmung des Abscheiders bewirkt.

## Patentansprüche

1. Verfahren zur Entfernung von Partikeln, insbesondere Rußpartikeln, aus dem Abgasstrom von Brennkraftmaschinen, wobei die Partikeln über zumindest eine Elektrode (4) elektrostatisch aufgeladen werden, teilweise Agglomerate bilden und die Partikeln bzw. Partikelagglomerate mittels eines oder mehrerer Filter (5) abgeschieden werden, **dadurch gekennzeichnet**, daß ein sintermetallischer Feinfilter (5) mit zumindest einer Niederschlagselektrode (5a) auch während der Regenerierung vom Abgas durchströmt wird und daß zur Regenerierung zeitweise durch das beladene Feinfilter (5) ein elektrischer Strom geleitet und dadurch das Feinfilter (5) über die Zündtemperatur der Partikel erwärmt wird.

2. Verfahren nach Anspruch 1, dadurch gekennzeichnet, daß das Filtermaterial (5a) des Feinfilters (5) selbst als Niederschlagselektrode (5a) dient.

3. Verfahren nach einem der Ansprüche 1 oder 2, dadurch gekennzeichnet, daß als Feinfiltermaterial (5a) ein ferritisches Sintermetall eingesetzt wird.

4. Verfahren nach einem der Ansprüche 1 bis 3, dadurch gekennzeichnet, daß zwischen den Elektroden (4; 1, 5) eine Hochspannung, vorzugsweise zwischen 2 und 15 kV, angelegt wird (6).

5. Verfahren nach einem der Ansprüche 1 bis 4, dadurch gekennzeichnet, daß ein elektrischer Strom kleiner 300 A mit einer elektrischen Leistung zwischen 200 und 140 W während einer Zeit von weniger als 20 s durch das Feinfilter (5) fließt (11, 12).

6. Verfahren nach einem der Ansprüche 1 bis 5, dadurch gekennzeichnet, daß die elektrische Stromzufuhr (11, 12) periodisch erfolgt.

7. Vorrichtung zur Entfernung von Partikeln, insbesondere Rußpartikeln, aus dem Abgasstrom von Brennkraftmaschinen, wobei die Vorrichtung ein Gehäuse (1) mit einer Zu- (2) und Ableitung (3) für den Abgasstrom, zumindest eine mit einer Hochspannungsquelle (6) verbundene Elektrode (4) zur elektrostatischen Aufladung der Partikeln und einen Filterkörper (5) umfaßt, **dadurch gekennzeichnet**, daß der ais Gegenelektrode dienende Filterkörper (5) dicht schließend in das Gehäuse (1) eingebaut ist, zumindest eine sintermetallische Filterfläche (5a) aufweist und die Filterfläche (5a) über elektrische Leitungen (11, 12) mit einer Stromquelle verbunden ist.

8. Vorrichtung nach Anspruch 7, dadurch gekennzeichnet, daß die sintermetallische Filterfläche (5a) leitend mit der Spannungsquelle (6), gegebenenfalls über das Gehäuse (1), verbunden ist.

9. Vorrichtung nach einem der Ansprüche 7 oder 8, dadurch gekennzeichnet, daß die Filterfläche (5a) aus ferritischem Sintermetall besteht.

10. Vorrichtung nach einem der Ansprüche 7 bis 9, dadurch gekennzeichnet, daß die Filterfläche (5a) aus einem Filtervlies besteht.

11. Vorrichtung nach einem der Ansprüche 7 bis 10, dadurch gekennzeichnet, daß die Filterfläche (5a) bevorzugt zylinderförmig, kegelstumpfförmig und/oder kegelförmig ausgebildet ist.

## Claims

1. Method of removing particles, in particular soot particles, from the exhaust-gas stream of internal combustion engines, the particles being charged electrostatically by means of at least one electrode (4) and in some cases forming agglomerates, and the particles or particle agglomerates being removed by means of one or more filters (5), characterized in that a sintered-metal fine filter (5) having at least one precipitation electrode (5a) has exhaust gas flowing through it even during the regeneration and in that, for the purpose of regeneration, an electrical current is intermittently passed through the laden fine filter (5) and the fine filter (5) is thereby heated above the ignition temperature of the particles.

2. Method according to Claim 1, characterized in that the filter material (5a) of the fine filter (5) itself serves as a precipitation electrode (5a).

3. Method according to one of Claims 1 or 2, characterized in that a ferritic sintered metal is used as fine-filter material (5a).

4. Method according to one of Claims 1 to 3, characterized in that a high voltage, preferably between 2 and 15 kV, is applied (6) between the electrodes (4; 1, 5).

5. Method according to one of Claims 1 to 4, characterized in that an electrical current of less than 300 A having an electrical power of between 200 and 140 W flows (11, 12) through the fine filter (5) during a time of less than 20 s.

6. Method according to one of Claims 1 to 5, characterized in that the electrical current supply (11, 12) takes place periodically.

7. Device for removing particles, in particular soot particles, from the exhaust-gas stream of internal combustion engines, the device comprising a housing (1) having an inlet pipe (2) and an outlet pipe (3) for the exhaust-gas stream, at least one electrode (4), connected to a high-voltage source (6), for the electrostatic charging of the particles, and a filter body (5), characterized in that the filter body (5) serving as counterelectrode is incorporated into the housing (1) in a tightly closing manner, has at least one sintered-metal filter area (5a) and the filter area (5a) is connected to a current source via electrical lines (11, 12).

8. Device according to Claim 7, characterized in that the sintered-metal filter area (5a) is connected in a conducting manner to the voltage source (6), optionally via the housing (1).

9. Device according to one of Claims 7 or 8, characterized in that the filter area (5a) is composed of ferritic sintered metal.

10. Device according to one of Claims 7 to 9, characterized in that the filter area (5a) is composed of a nonwoven filter fabric.

11. Device according to one of Claims 7 to 10, characterized in that the filter area (5a) is preferably of cylindrical, frustoconical and/or conical design.

## Revendications

1. Procédé d'élimination de particules, en particulier de particules de noir de fumée, du courant de gaz d'échappement de moteurs à combustion interne, les particules étant chargées électrostatiquement par l'intermédiaire d'au moins une électrode (4), les particules formant en partie des agglomérats et les particules, respectivement les agglomérats de particules, étant précipités à l'aide d'un ou de plusieurs filtres (5), **caractérisé en ce qu'**un filtre fin en métal fritté (5) avec au moins une électrode de précipitation (5a) est traversé également par le gaz d'échappement pendant la régénération et en ce qu'un courant électrique est conduit temporairement dans l'optique de la régénération à travers le filtre fin chargé (5) et en ce que, par conséquent, le filtre fin (5) est chauffé au-delà de la température d'inflammation des particules.

2. Procédé selon la revendication 1, caractérisé en ce que le matériau de filtre (5a) du filtre fin (5) sert lui-même en tant qu'électrode de précipitation (5a).

3. Procédé selon l'une quelconque des revendications 1 ou 2, caractérisé en ce que l'on utilise en tant que matériau du filtre fin (5a) un métal fritté ferritique.

4. Procédé selon l'une quelconque des revendications 1 à 3, caractérisé en ce que l'on applique (6) entre les électrodes (4; 1, 5) une haute tension, comprise de préférence entre 2 et 15 kV.

5. Procédé selon l'une quelconque des revendications 1 à 4, caractérisé en ce qu'un courant électrique inférieur à 300 A avec une puissance électrique comprise entre 200 et 140 W s'écoule (11, 12) à travers le filtre fin (5) pendant une durée de moins de 20 secondes.

6. Procédé selon l'une quelconque des revendications 1 à 5, caractérisé en ce que l'apport de courant électrique (11, 12) se fait périodiquement.

7. Dispositif d'élimination de particules, en particulier de particules de noir de fumée, du courant de gaz d'échappement de moteurs à combustion interne, le dispositif comprenant un boîtier (1) avec une conduite d'amenée (2) et une conduite d'évacuation (3) pour le courant de gaz d'échappement, au moins une électrode (4) reliée à une source de haute tension (6) en vue du chargement électrostatique des particules et un corps de filtre (5), **caractérisé en ce que** le corps de filtre (5) servant de contre-électrode est placé de façon à clore de manière étanche le boîtier (1), en ce qu'il présente au moins une surface de filtre en métal fritté (5a) et en ce que la surface de filtre (5a) est reliée par l'intermédiaire de conduites électriques (11, 12) avec une source de courant.

8. Dispositif selon la revendication 7, caractérisé en ce que la surface de filtre en métal fritté (5a) est reliée de manière conductrice avec la source de tension (6), le cas échéant, par le biais du boîtier (10).

9. Dispositif selon l'une quelconque des revendications 7 ou 8, caractérisé en ce que la surface de filtre (5a) se compose de métal fritté ferritique.

10. Dispositif selon l'une quelconque des revendications 7 à 9, caractérisé en ce que la surface de filtre (5a) se compose d'un non tissé de filtre.

11. Dispositif selon l'une quelconque des revendications 7 à 10, caractérisé en ce que la surface de filtre (5a) est formée de préférence sous forme de cylindre, sous forme de tronc de cône et/ou sous forme de cône.
